# FASCICULE DE BREVET EUROPEEN

(11) **EP 1 545 140 B1**
(45) Date de publication et mention de la délivrance du brevet: **23.11.2016**
(21) Numéro de dépôt: 04292956.2
(22) Date de dépôt: 10.12.2004
(51) Int. Cl.: H04B 7/185, H04W 88/18

(54) **Compression/décompression de couche deux au sein d'un réseau de communication cellulaire**
Schicht-ZweiI Kompression/Dekompression in einem zellularen Kommunikationsnetz
Layer two compression/decompression in a cellular communications network

(30) Priorité: 15.12.2003 FR 0314755
(43) Date de publication de la demande: 22.06.2005
(73) Titulaire: 8631654 Canada Inc., Ottawa, ON K2K 3J1 (CA)
(72) Inventeur: Chevallier, Emmanuelle, 78360 Orgeval (FR); Farineau, Jean, 92300 Levallois Perret (FR); Lignon, Jean-Noel, 31270 Frouzins (FR); Gerrier, Christophe, 92700 Colombes (FR); Denis, Xavier, 31770 Colomiers (FR); Aime, Christelle, 92100 Boulogne Billancourt (FR)
(74) Mandataire: Roberts, Mark Peter

(56) Documents cités:
- EP-A- 1 478 195
- WO-A-01/58184
- WO-A-99/05871
- WO-A-99/26358
- FR-A- 2 828 979
- US-A- 5 892 811
- US-A1- 2003 050 775

## Description

L'invention concerne le domaine de la transmission de trames de données au sein de réseaux de communications, et plus particulièrement la transmission avec compression/décompression.

Un certain nombre de réseaux de communications sont pourvus de compresseurs/décompresseurs chargés de compresser les données contenues dans des trames à transmettre, afin d'augmenter leurs capacités en terme de liaisons.

Dans ces réseaux, la compression/décompression est dite « couche un (1) » du fait qu'elle s'applique à la couche physique de toutes les trames à compresser, indépendamment de leur type. La compression couche un consiste à détecter les redondances entre les données contenues dans des portions identiques comprenant des trames de flux de trames à transmettre, dites trame d'entrée, afin de les supprimer tout en les signalant afin qu'elles puissent être reconstituées lors de la décompression. Les trames de flux ainsi compressées sont stockées de façon provisoire dans des files d'attente de mémoires tampon, afin d'être acheminées à destination en fonction de la capacité de transmission disponible.

Il est ici rappelé qu'une trame d'entrée est une trame qui alimente le compresseur. Elle est constituée d'une multiplicité de trames de flux constituant des portions de trames initiales associées à des canaux de transmission différents. Par exemple, en mode de transmission TDMA, chaque trame d'entrée se décompose en un nombre fixe d'intervalles temporels (ou « time slots ») comportant chacun un octet. Ce nombre est égal à 32 dans le cas de trames de type E1, et à 24 dans le cas de trames de type T1, conformément aux recommandations G.703/G.704 de l'ITU-T. Généralement, la fréquence trame est de 8 kHz, ce qui permet à une trame E1 de véhiculer 31 canaux utiles à 64 kbps (kbits/s), à raison d'un canal par intervalle temporel.

Au sein d'un réseau cellulaire, l'interface A-bis assure le couplage entre un contrôleur de station de base (ou BSC pour « Base Station Controller ») et une ou plusieurs stations de base (BTS), en utilisant des trames de type E1 ou T1. L'interface A-bis porte deux types de flux : les flux de trafic, de type parole ou données, et les flux de signalisation. Pour véhiculer les flux de trafic, chaque octet de la trame E1 ou T1 se décompose soit en quatre doublets (échantillon de deux bits appelé « nibble ») portant chacun un canal de trafic à 16 kbps (mode dit « full rate » ou FR), soit en huit canaux de trafic en débit moitié (mode dit « half rate » ou HR dans lequel chaque bit correspond à un canal vocal). Les flux de signalisation sont quant à eux généralement portés par des canaux de deux bits (canaux à 16 kbps) ou 8 bits (canaux à 64 kbps). Une trame initiale, de type E1 ou T1, constitue ainsi un ensemble de canaux de transmission, de taille allant de 1 bit pour les canaux 8 kbps à 8 bits pour les canaux 64 kbps; chaque canal servant à véhiculer des trames de flux, propres à chaque canal de transmission.

Les flux de trafic sont véhiculés par des trames TRAU (pour « Transcoder/Rate Adaptor Unit ») échangées entre chaque BTS et le centre de commutation mobile du réseau PLMN (pour « Public Land Mobile Network »), en transitant par le transcodeur/unité d'adaptation de taux (ou TRAU). Ce dernier est notamment destiné à convertir les données de parole comprimées à 13 kbps en données de parole numérisées à 64 kbps afin de rendre les canaux de parole compatibles avec le centre de commutation mobile. Le couplage entre le centre de commutation mobile et le TRAU s'effectue par une interface appelée A, tandis que le couplage entre le contrôleur BSC et le TRAU s'effectue par une interface appelée A-ter.

Dans ce qui suit, on appelle « canal actif » tout canal de trafic établi, c'est à dire pour lequel une procédure d'établissement d'appel a été correctement effectuée par le biais d'un canal de signalisation, procédure aboutissant à la mise en place d'un canal de trafic dédié à cet appel, maintenu jusqu'à la phase de fin d'appel. Un canal de trafic sert à acheminer les trames TRAU échangées entre un appelant et un appelé pendant toute la durée de l'appel, y compris pendant les phases de silence.

Il est par ailleurs rappelé que les trames TRAU peuvent être de quatre types : les trames de parole (ou de transfert de données) qui comportent au moins des données de contrôle et des données utiles, les trames de silence qui comportent au moins des données de contrôle, les trames SID (pour « Silence Descriptor ») qui comportent au moins des données de contrôle et des données utiles, et les mauvaises trames (ou « bad frames ») qui comportent au moins des données de contrôle.

Dans ce qui suit, le cas des trames TRAU utilisées pour le transfert de données sera assimilé au cas des trames TRAU utilisées pour le transport de la parole, le traitement appliqué étant identique dans les deux cas.

Le document brevet EP-A-1478195 est relatif à un dispositif de gestion de ressources d'un réseau de communications par deux niveaux d'allocations.

Lorsque le décompresseur reçoit des trames de flux compressées, il les décompresse successivement de manière à recomposer (ou restituer) les trames initiales dont elles constituent les portions. Un tel mode de transmission avec compression/décompression peut être qualifié d'asynchrone. Il introduit en effet des délais de transmission « bout-en-bout », pour les trames initiales (ou flux) recomposé(e)s, qui varient en fonction de la charge du réseau. En outre, ces délais peuvent varier notablement d'un canal de transmission à l'autre. Par ailleurs, le délai maximum de transmission, qui peut être considéré comme un paramètre garanti par l'opérateur du réseau, est élevé du fait que le traitement mis en oeuvre tout au long de la chaîne de transmission est non déterministe.

Ce non déterminisme du déliai bout-en-bout, combiné au fait que l'on doit prendre des marges confortables pour garantir un délai maximum de transmission, rendent quasi impossible l'utilisation de la technique de compression présentée ci-avant dans un réseau de communications vocal, comme par exemple un réseau GSM.

L'invention a donc pour but d'améliorer la situation, et notamment de garantir une délai bout-en-bout sur la chaine de transmission, tout en assurant une compromis optimal entre le gain de compression et ledit délai bout-en-bout, et si possible en autorisant une compatibilité de fonctionnement avec une compression/décompression couche un.

Elle propose à cet effet un dispositif de compression de données de trames d'entrée constituées de trames de flux définissant des portions de trames TRAU et de signalisation, devant être transmises au sein d'un réseau de communications et constituées chacune d'au moins un entête comportant des données de contrôle représentatives au moins de leur type et d'éventuelles données utiles, certains types comportant des données critiques et/ou non critiques en terme de délai de transmission bout-en-bout.

Ce dispositif de compression se caractérise par le fait qu'il est capable d'adapter son mode de compression en fonction du type de trame. Un tel dispositif assure ainsi une compression dite « couche deux (2) ».

Plus précisément, le dispositif comprend, d'une part, des moyens chargés d'analyser chaque entête de trame TRAU ou de signalisation contenu dans des trames d'entrée successivement reçues, afin de déterminer son type, et d'autre part, des moyens de compression chargés de générer périodiquement (ou de façon cyclique) des trames compressées à transmettre, subdivisées en de première et seconde sections de tailles variables, la première section comportant des données critiques compressées de façon synchrone, et la seconde section comportant des données non critiques compressées de façon asynchrone.

Dans un mode de fonctionnement que l'on peut qualifier de « fixe », les tailles des première et seconde sections sont variables et complémentaires.

Le dispositif de compression selon l'invention peut comporter d'autres caractéristiques qui pourront être prises séparément ou en combinaison, et notamment :
- les types de trame peuvent être choisis parmi i) les trames de parole comportant notamment des données de contrôle et des données utiles critiques, ii) les trames de silence comportant au moins des données de contrôle critiques, iii) les trames SID comportant au moins des données de contrôle critiques et des données utiles non critiques, et iv) les mauvaises trames comportant au moins des données de contrôle critiques,
- les moyens de compression peuvent être chargés de générer une trame compressée toutes les N trames d'entrée reçues. Ils effectuent alors une agrégation des N trames d'entrée en une seule trame compressée au cours d'un cycle de compression,
- les moyens de compression peuvent être chargés d'intégrer les trames de parole dans les trames compressées, sans modification préalable,
- en variante, lorsque les trames de parole comprennent des données de synchronisation, les moyens de compression peuvent être chargés d'intégrer les trames de parole dans les trames compressées, après avoir supprimé leurs données de synchronisation mais sans avoir modifié les données de contrôle et les données utiles,
- les moyens de compression peuvent être chargés, une fois qu'ils sont en possession de l'ensemble des données de contrôle d'une trame SID ou de silence, ou bien d'une mauvaise trame, de supprimer de celles-ci les informations redondantes ou non significatives afin de générer un mot d'informations pertinentes, par exemple de deux octets,
- les moyens de compression peuvent être chargés de constituer des trames compressées dont la première section comprend au moins un mot d'informations pertinentes et/ou une trame de parole, sans modification (ou en variante avec suppression des données de synchronisation), ainsi qu'un entête identifiant le début de la trame compressée et les informations désignant chaque canal de la trame d'entrée reçue auquel appartiennent les données dont sont issues les informations pertinentes ou les données de la trame de parole,
- les moyens de compression peuvent être chargés d'extraire les données utiles qui sont contenues dans les trames SID afin de les stocker provisoirement dans une mémoire tampon, ainsi que les trames de signalisation reçues, en fonction de leur ordre d'arrivée, pour constituer un « enchaînement », puis d'extraire en tête de l'enchaînement une portion dont la taille est choisie en fonction de la taille variable en cours de la seconde section afin de l'intégrer dans la seconde section de la trame en cours de compression, en compagnie d'un entête identifiant le début de la portion extraite et des informations désignant chaque canal de la trame d'entrée reçue auquel appartiennent les données utiles ou les données de signalisation de cette portion d'enchaînement extraite, et enfin de concaténer la seconde section à la première section afin de définir une trame compressée à transmettre,
- les moyens de compression peuvent être chargés d'adapter les tailles respectives des première et seconde sections en fonction du trafic au sein du réseau, en terme de trames de parole et de transfert de données.

L'invention propose également un dispositif de décompression de données contenues dans des trames compressées à l'aide d'un dispositif de compression du type de celui présenté ci-avant.

Ce dispositif de décompression se caractérise par le fait qu'il comprend, d'une première part, des moyens de détection chargés d'analyser les trames compressées successivement reçues afin de séparer leurs première et seconde sections, d'une deuxième part, des premiers moyens de traitement chargés de reconstituer de façon synchrone les données critiques initialement contenues dans les trames d'entrée et ayant été compressées de façon synchrone, à partir des premières sections reçues, d'une troisième part, des seconds moyens de traitement chargés de reconstituer de façon asynchrone les données non critiques initialement contenues dans les trames d'entrée et ayant été compressées de façon asynchrone, à partir des secondes sections reçues, et d'une quatrième part, des moyens de restitution chargés de reconstruire les trames d'entrée à partir des données critiques et non critiques reconstituées.

Préférentiellement, les moyens de traitement synchrone et les moyens de traitement asynchrone d'un tel dispositif de décompression fonctionnent en parallèle.

L'invention propose en outre un compresseur/décompresseur équipé d'un dispositif de compression et d'un dispositif de décompression du type de ceux présentés ci-avant.

L'invention trouve une application particulièrement intéressante, bien que non exclusive, dans tous les réseaux de communications de type point à point, point à multipoint ou multipoint à multipoint tels que les réseaux de communications par satellite, les réseaux de communications terrestres, comme par exemple les réseaux sur base E1 ou T1 et analogues, ou sur base Ethernet, IP, Frame Relay et ATM, et les réseaux de communications terrestres utilisant une extension satellitaire (ou des déport(s) par satellite ou par voie hertzienne) sur une partie de leurs liaisons, comme par exemple les réseaux cellulaires de type TDMA ou CDMA.

D'autres caractéristiques et avantages de l'invention apparaîtront à l'examen de la description détaillée ci-après, et des dessins annexés, sur lesquels :
- la figure 1 illustre de façon schématique une partie d'un réseau de communications à extension satellitaire selon l'invention,
- la figure 2 illustre de façon schématique un système de traitement de trames comprenant un exemple de réalisation d'un compresseur/décompresseur selon l'invention,
- la figure 3 illustre de façon schématique un exemple de trame d'entrée E1,
- la figure 4 illustre de façon schématique un exemple de trame initiale TRAU,
- la figure 5 illustre de façon schématique un exemple de trame compressée selon l'invention, et
- la figure 6 illustre de façon schématique un exemple d'enchaînement de données utiles non critiques, stocké dans une mémoire tampon en attente d'insertion dans une seconde section d'une trame compressée du type de celle illustrée sur la figure 5.

Les dessins annexés pourront non seulement servir à compléter l'invention, mais aussi contribuer à sa définition, le cas échéant.

L'invention a pour objet de permettre la compression/décompression couche deux (2) de trames de données au sein d'un réseau de communications.

Dans ce qui suit, on considérera, de façon non limitative, que le réseau de communications est un réseau de téléphonie cellulaire, par exemple de type GSM (ou 2G) ou GSM/GPRS (2,5G), à extension satellitaire (ou déport(s) par satellite). Mais, l'invention ne se limite pas à ce type de réseau. Comme indiqué précédemment, elle concerne tous les réseaux de communications de type point à point, point à multipoint ou multipoint à multipoint, dans lesquels sont définies des liaisons câblées à ressources de transmission fixes ou partagées, ou des liaisons radio à ressources de transmission fixes ou partagées, et notamment les réseaux de communications par satellite, les réseaux de communications terrestres, comme par exemple les réseaux sur base E1 ou T1 et analogues, ou sur base Ethemet, IP, Frame Relay et ATM, et les réseaux de communications terrestres radio utilisant une extension satellitaire (ou des déport(s) par satellite ou par voie hertzienne) sur une partie de leurs liaisons, comme par exemple les réseaux cellulaires de type TDMA ou CDMA.

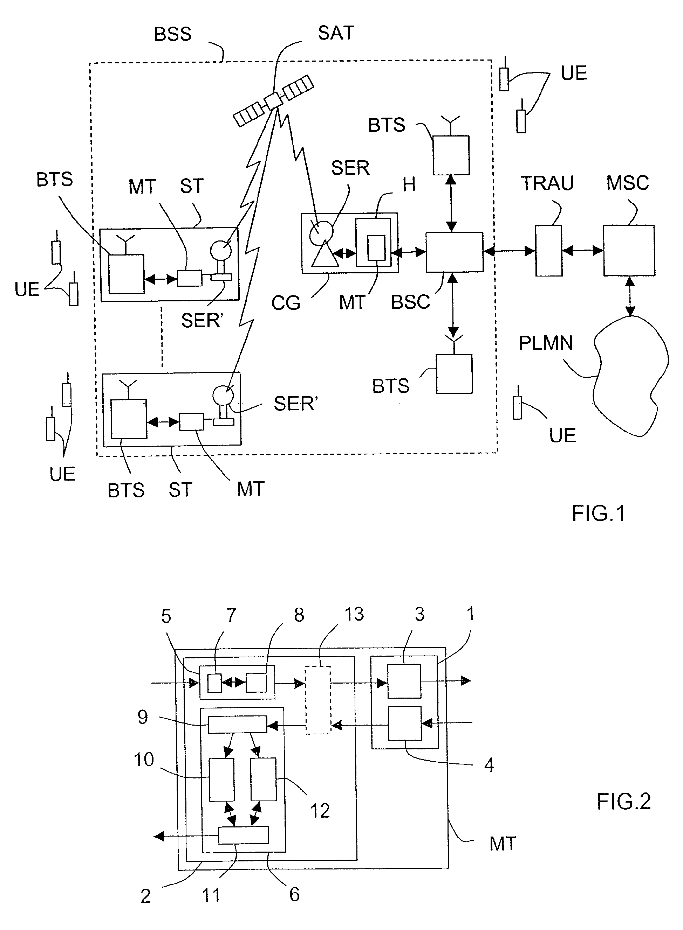

Un réseau de communications GSM à extension satellitaire, du type de celui illustré sur la figure 1, peut, d'une façon très schématique mais néanmoins suffisante à la compréhension de l'invention, être résumé à un sous-système radio classique, appelé système de station de base BSS (pour « Base Station System »), couplé à un coeur de réseau ou « Core Network », ici matérialisé, de façon très réductrice, sous la forme d'un centre de commutation mobile MSC (ou « Mobile Switching Centre ») lui-même couplé à un réseau PLMN (pour « Public Land Mobile Network »). Le centre de commutation mobile MSC est chargé de réaliser toutes les opérations nécessaires à la gestion des communications avec des terminaux d'utilisateurs UE.

Classiquement, le système BSS comporte au moins un centre de gestion de trafic CG, par exemple agencé sous la forme d'un « hub » H couplé à une station émettrice/réceptrice SER par laquelle s'effectuent les liaisons satellite Li avec un satellite relais de communications SAT. En variante, le hub H, qui constitue le centre d'échange avec des stations de trafic ST distantes, peut être dissocié et/ou espacé du centre de gestion CG.

Le satellite relais SAT est couplé par les liaisons satellites à des stations de trafic ST, du système BSS, comportant chacune une station de base appelée BTS (pour « Base Transceiver Station ») gérant au moins une cellule radio dans laquelle des terminaux d'utilisateurs UE peuvent établir des communications mobiles. Chaque station de base BTS est couplée à un système de traitement MT chargé du traitement des trames à transmettre et des trames reçues et de l'allocation des ressources, et elle-même couplée à une station émettrice/réceptrice SER' par laquelle s'effectue la liaison satellite Li avec le satellite SAT.

Il est ici rappelé que le hub H est relié aux différentes stations de trafic ST par des liaisons satellite qui utilisent une ressource partagée (porteuse Lf) en mode Forward (c'est-à-dire du hub H vers les stations de trafic ST) et un ensemble de porteuses (Lr) partagées par l'ensemble des liaisons en mode Return (c'est-à-dire des stations de trafic ST vers le hub H).

Le système BSS comporte également au moins un contrôleur de station de base BSC (ou Base Station Controller) couplé, d'une part, au centre de gestion de trafic CG, et plus précisément à son hub H, et d'autre part, au centre de commutation mobile MSC. Le contrôleur BSC est principalement chargé de gérer les ressources des différentes stations de base BTS qui lui sont rattachées ainsi que les fonctions d'exploitation et de maintenance desdites stations de base.

Le partage des ressources de transmission est contrôlé par le centre de gestion de trafic CG. Plus précisément, le centre de gestion de trafic CG alloue dynamiquement des ressources satellite, sous forme de fréquences de transmission (en mode de fonctionnement SCPC) ou d'intervalles de temps (ou « time slots ») d'une trame temporelle (en mode de fonctionnement TDMA (multiplexage temporel)), en fonction des besoins respectifs des différentes stations de trafic ST qu'il gère. En d'autres termes, le centre de gestion de trafic CG répartit les ressources (ou canaux de transmission) du satellite SAT entre les différentes liaisons satellite qu'il gère.

On considère dans ce qui suit, de façon non limitative, que le réseau est de type TDMA.

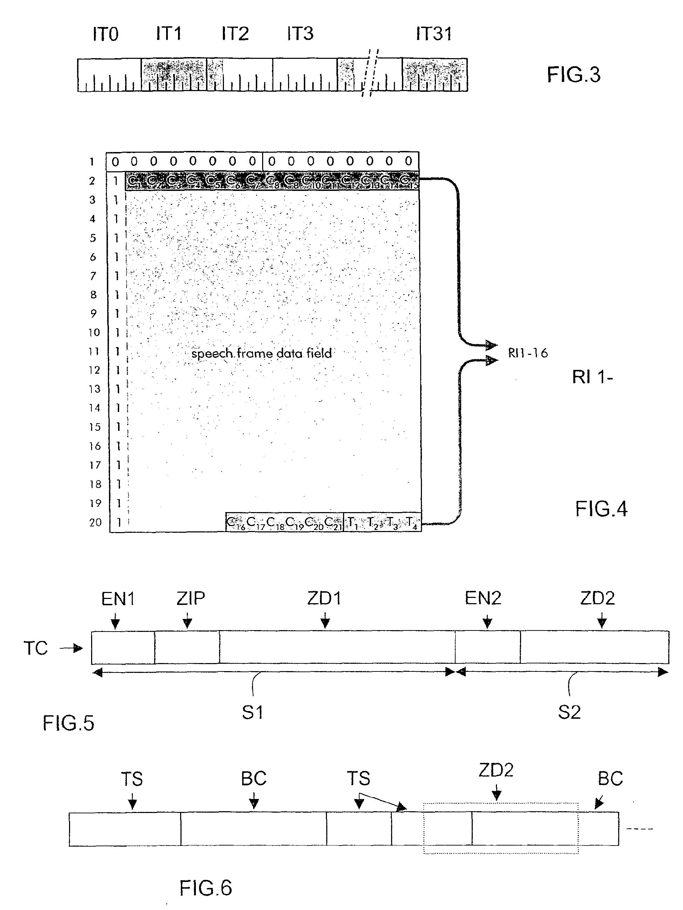

Comme indiqué précédemment, le couplage entre le contrôleur BSC et les stations de base BTS s'effectue par l'interface A-bis, de type synchrone, qui opère avec un tramage de type G.704 (on parle alors de trames E1, du type de celle illustrée sur la figure 3). Comme illustré sur la figure 1, le contrôleur BSC peut être également couplé directement, via des déports A-bis terrestres, à des stations de base BTS indépendantes des liaisons satellite.

Le couplage entre le contrôleur BSC et le centre de commutation mobile MSC s'effectue ici par l'intermédiaire d'un transcodeur/unité d'adaptation de taux (ou TRAU pour « Transcoder/Rate Adaptor Unit »). Ce dernier est destiné à convertir les données de parole comprimées à 13 kbps en données de parole numérisées à 64 kbps afin de rendre les canaux de parole compatibles avec le centre de commutation mobile MSC. Il est en effet rappelé qu'à l'interface A entre le MSC et le transcodeur TRAU, la transmission des données et de la signalisation dans les réseaux GSM/GPRS s'effectue dans des canaux à 64 kbps.

Comme indiqué précédemment, le couplage entre le centre de commutation mobile MSC et le TRAU s'effectue par une interface appelée A, tandis que le couplage entre le contrôleur BSC et le TRAU s'effectue par une interface appelée A-ter. Afin d'assurer une couverture de territoire importante, le centre de commutation mobile MSC peut être couplé à plusieurs contrôleurs BSC via plusieurs interfaces A-ter.

Comme cela est illustré sur la figure 2, le hub H, tout comme chaque station de base ST, comporte un système de traitement de trames MT comprenant un modem 1 couplé à un compresseur/décompresseur 2.

Le modem 1 est constitué d'un modulateur 3, produisant une porteuse modulée, destinée à moduler les trames compressées par le compresseur/ décompresseur 2 et provenant initialement du contrôleur BSC ou d'une BTS, et d'un ensemble de démodulateurs 4 destinés chacun à démoduler la porteuse provenant d'une station de trafic distante ST ou du contrôleur BSC afin de restituer les trames compressées au compresseur/décompresseur 2 afin qu'il les décompresse avant de les transmettre au contrôleur BSC ou à la BTS.

Chaque compresseur/décompresseur 2 comporte un dispositif de compression 5 et un dispositif de décompression (ou expansion) 6. Dans la pratique, chaque système de traitement de trames MT comporte autant de compresseurs/décompresseurs 2 que de liaisons satellite Li. En fait, chaque compresseur/décompresseur 2 est alimenté en trames démodulées et compressées par un démodulateur 4 et alimente en trames compressées à moduler un modulateur 3.

On considère dans ce qui suit que chaque dispositif de compression 5 reçoit des trames d'entrée à compresser, de type E1 (mais il pourrait également s'agir de trames de type T1, de trames de type PDH ou de trames portées par des canaux de type SDH), provenant du contrôleur BSC ou d'une BTS.

Comme cela est illustré sur la figure 3, une trame E1 se décompose en 32 intervalles temporels (ou time slots) IT0 à IT31 comportant chacun un octet, conformément aux recommandations G.703/G.704 de l'ITU-T.

Hormis l'intervalle temporel IT0, chaque intervalle temporel (IT1 à IT31) porte un ou plusieurs canaux de transmission dédiés à une communication (ou liaison) ou au transport de la signalisation. Chaque canal de transmission porte une succession de « trames initiales », qui sont des trames TRAU pour le transport de la parole et le transfert de données, ou des trames de signalisation provenant d'une BTS ou d'un contrôleur BSC et devant être transmises au réseau ou à un terminal d'utilisateur UE.

Il est rappelé qu'une trame TRAU peut être de quatre types différents :
- les trames de parole (ou de transfert de données) qui comportent au moins des données de contrôle critiques et des données utiles critiques,
- les trames de silence qui comportent au moins des données de contrôle critiques,
- les trames SID qui comportent au moins des données de contrôle critiques et des données utiles non critiques, et
- les mauvaises trames (ou bad frames) qui comportent au moins des données de contrôle critiques.

Un exemple de trame TRAU de type parole est illustré sur la figure 4. Les données de synchronisation sont constituées des seize premiers bits à zéro (0), et de dix neuf bits à un (1), un tous les seize bits suivants. Les données de contrôle sont constituées des bits C₁ à C₂₁ et T₁ à T₄. Plus précisément, les bits C₁ à C₁₅ constituent l'entête de la trame TRAU, les bits C₁₆ à C₂₁ constituent une partie de la partie terminale de la trame TRAU, et les bits T₁ à T₄ (facultatifs) constituent une autre partie de la partie terminale de la trame TRAU, destinée au calage temporel (ou « time alignement »). L'ensemble des bits de contrôle C₁ à C₂₁ caractérise la trame TRAU, et notamment son type parmi les quatre types mentionnés précédemment. Par ailleurs, le champ réservé aux données de parole (ou « speech frame data field ») est placé entre l'entête et la partie terminale. Les données de parole constituent ici les données utiles.

Une trame TRAU comporte ainsi 320 bits, soit 20x16 bits, qui correspondent à une durée de 20 ms (millisecondes) dans les cas « full rate » (FR) et « enhanced full rate » (EFR), ou 160 bits soit 20x8 bits dans le cas « half rate » (HR).

Dans le cas d'une trame TRAU de type silence, le champ de données de parole est non valide. Dans le cas d'une trame TRAU de type SID, le champ de données de parole porte la définition du bruit de confort.

Le cas de la trame TRAU de type mauvaise trame est particulier. Il correspond à une trame initiale reçue par une BTS avec une qualité radio insuffisante en terme de rapport signal/bruit. L'un des bits de contrôle d'une telle trame signale cette mauvaise qualité (bit BFI, pour « Bad Frame Indication »).

Dans l'exemple de trame E1 illustré sur la figure 3, les parties grisées sont réservées aux trames de signalisation, tandis que les parties non grisées sont réservées à la parole. Dans cet exemple, donné seulement à titre illustratif, l'intervalle temporel IT1 porte un canal de signalisation à 64 kbps, l'intervalle temporel IT2 porte un canal de signalisation à 16 kbps puis 3 canaux de trafic à 16 kbps (ou 6 canaux de trafic à 8 kbps, voire une combinaison de canaux à 16 kbps et de canaux à 8 kbps), et l'intervalle temporel IT3 ne porte que des canaux de trafic.

Un dispositif de compression 5 assure non seulement la compression des trames à transmettre, mais également l'adaptation du format des blocs de données à l'interface avec le modem 1, laquelle est de type E1, T1, Ethernet, IP ou ATM. Par ailleurs, un dispositif de décompression 6 assure non seulement la restitution, par décompression, des trames initiales (c'est-à-dire telles qu'elles étaient avant d'être compressées dans la station de trafic ST), mais également l'adaptation à l'interface avec le modem 1, laquelle est généralement du même type que celle de la partie compression.

Comme indiqué ci-avant, certains flux, comme par exemple ceux contenant des données de parole, sont critiques en terme de délai de transmission bout-en-bout, et doivent de ce fait être traités différemment des autres flux afin de permettre à l'opérateur de garantir leur transmission selon un délai bout-en-bout fixe et le plus court possible.

L'invention propose donc de traiter les flux critiques selon un traitement synchrone déterministe tout le long de la chaîne de transmission (compression - transmission - décompression), et les flux non critiques selon un traitement asynchrone (non déterministe) tout le long de la chaîne de transmission.

La dissociation entre flux traités de façon synchrone et asynchrone est établie par configuration. Plus précisément, c'est l'opérateur qui spécifie quels canaux doivent être traités de façon synchrone (généralement ceux qui supportent les communications vocales), et quels canaux doivent être traités de façon asynchrone (généralement ceux qui supportent les informations de signalisation).

Le dispositif de compression 5 est donc configuré de manière à différencier les flux critiques des flux non critiques, puis à leur appliquer des traitements différents (synchrone et asynchrone).

Il comporte à cet effet un module d'analyse 7 chargé d'analyser les bits de contrôle de chaque trame TRAU reçue de la BTS ou du BSC, afin de déterminer le type de la trame reçue. Ce module d'analyse 7 opère par cycle de compression. Dans l'exemple décrit, le cycle de compression porte sur N = 64 trames E1, soit une durée de 8 ms, chaque trame E1 ayant une durée de 125 µs (microsecondes). Le cycle de compression définit la cadence à laquelle les trames compressées TC sont transmises du dispositif de compression 5 vers le dispositif de décompression 6 situé à l'autre extrémité de la liaison. Le cycle de compression définit également le rythme auquel les trames TRAU d'entrée sont analysées.

Une trame initiale TRAU ayant une durée de 20 ms, il faut 3 cycles de compression consécutifs pour disposer de la totalité des informations qu'elle véhicule, notamment les bits de contrôle situés en début et en fin de trame TRAU. En fonction de la valeur de ces bits de contrôle, la trame TRAU est identifiée en tant que trame de parole (ou trame de transfert de données), trame de silence, trame SID, ou mauvaise trame. Le module d'analyse 7 peut ainsi déterminer le type de compression qui doit être appliqué à la trame TRAU reçue au cours des 3 cycles de compression considérés.

Pour les canaux de signalisation, le module d'analyse 7 se borne à extraire les trames portées par le canal, et à les stocker dans une mémoire tampon (ou buffer) dédiée au canal considéré.

Le dispositif de compression 5 comporte également un module de compression 8 chargé de générer à chaque cycle de compression une trame compressée TC, en exploitant les données extraites par le module d'analyse 7.

Plus précisément, dès que le module de compression 8 est averti par le module d'analyse 7 du type d'une trame TRAU, il assure la transmission des données significatives portées par la trame TRAU :
- données de contrôle et données utiles critiques pour une trame reconnue en tant que trame de parole ou de transfert de données,
- données de contrôle pour une trame de silence,
- données de contrôle et données utiles non critiques pour une trame reconnue en tant que trame SID,
- données de contrôle pour une mauvaise trame.

Pour les canaux de signalisation, le module de compression 8 assure le multiplexage des flux de signalisation avec les flux de trafic.

Selon l'invention, et comme illustré sur la figure 5, chaque trame TC, compressée par le module de compression 8, comprend des première S1 et seconde S2 sections de tailles variables. La première section S1 comporte des données critiques compressées de façon synchrone, et la seconde section S2 comporte des données non critiques compressées de façon asynchrone.

Préférentiellement, les données critiques sont les données (ou bits) de contrôle (C₁ à C₂₁ et T₁ à T₄) et les données de parole, tandis que les données non critiques sont les données de bruit de confort (des trames SID) et les données de signalisation (des trames de signalisation).

La compression peut s'effectuer comme indiqué ci-après.

Le module de compression 8 constitue tout d'abord les premières sections S1 des trames compressées TC, également appelées trames synchrones. Ces trames synchrones S1 comportent, comme illustré sur la figure 5, un entête EN1 ainsi qu'un champ ZIP et/ou un champ ZD1.

Le champ ZIP est un champ dédié aux informations dites pertinentes contenues dans les données de contrôle C₁ à C₂₁ et T₁ à T₄ (soit 25 bits) des trames SID, des trames de silence, et des mauvaises trames. Il comprend de préférence un mot d'informations pertinentes (ou RI 1-16 pour « Relevant Information »), par exemple de deux octets (16 bits), constitué par suppression des informations redondantes ou non significatives contenues dans les 25 bits des données de contrôle.

Le champ ZD1 est un champ dédié aux données de parole contenues dans les trames de parole. Il comprend par exemple l'intégralité des données contenues dans la trame de parole, à savoir les données de synchronisation, les données de contrôle et les données de parole. Mais, en variante, il peut contenir une version compressée de la trame de parole, c'est-à-dire seulement ses données de contrôle et ses données de parole (les bits de synchronisation (35 bits) sont alors supprimés).

Le champ d'entête EN1 identifie le début de la trame synchrone et donc le début de la trame compressée. Il comporte également les informations qui désignent chaque canal de la trame d'entrée reçue auquel appartiennent les données dont sont issues les informations pertinentes du mot de deux octets (ZIP) ou les données de la trame de parole (ZD1). En fait, il comprend toutes les informations nécessaires au dispositif de décompression 6 pour reconstituer les données critiques et donc les trames dont elles sont issues.

Préférentiellement, et comme illustré, le champ ZIP est intercalé entre l'entête EN1 et le champ ZD1.

Une fois la première section S1 constituée, le module de compression 8 constitue la seconde section S2 des trames compressées TC, également appelée trame asynchrone. Comme illustré sur la figure 5, chaque trame asynchrone S2 comporte un entête EN2 et un champ ZD2.

Le champ ZD2 comporte des données non critiques, et plus précisément les données de signalisation et/ou les données utiles de bruit de confort des trames SID. Il peut également être au moins en partie constitué de données de bourrage, en l'absence de données non critiques à transmettre ou lorsque le nombre de données non critiques à transmettre est insuffisant.

En fait, ces données non critiques sont stockées provisoirement par le module de compression 8, au fur et à mesure de leur arrivée, dans des files d'attente de mémoires tampon où elles constituent des enchaînements du type de celui illustré sur la figure 6.

Ces données sont ensuite extraites par le module de compression 8 en fonction de leur ordre d'arrivée (les plus anciennes, c'est-à-dire celles placées en tête de l'enchaînement, étant extraites en premier), mais surtout en fonction de la taille disponible à l'instant de la compression dans la seconde section S2.

Les tailles respectives des première S1 et seconde S2 sections d'une trame compressée TC varient préférentiellement de façon indépendante, avec une valeur globale fixe ou évolutive, en fonction de la charge du réseau (en terme de nombre de trames de parole à transmettre).

Avec des ressources de transmission fixes, plus le nombre de trames de parole à transmettre est élevé, comme par exemple aux heures de pointe, plus la taille de la première section S1 est grande et plus la taille de la seconde section S2 est petite. Inversement, moins le nombre de trames de parole à transmettre est élevé, comme par exemple aux heures creuses, plus la taille de la seconde section S2 est grande et plus la taille de la première section S1 est petite.

Avec des ressources de transmission évolutives, ce qui est le cas avec un dispositif de transmission opérant en mode DAMA, les deux sections peuvent évoluer de manière indépendante l'une vis-à-vis de l'autre, le dispositif de transmission adaptant les ressources allouées à la charge globale constituée par les flux véhiculés via la première section S1 et via la seconde section S2.

Les tailles respectives des première S1 et seconde S2 sections sont actualisées à chaque cycle de compression en fonction notamment de la charge de trafic. Ainsi, à chaque instant le module de compression 8 sait la quantité de données non critiques qu'il peut extraire d'un enchaînement stocké dans une mémoire tampon pour alimenter le champ ZD2 de la trame asynchrone S2.

Lorsque le nombre de données, stockées en tête d'un enchaînement et appartenant à une même trame, par exemple de signalisation, est supérieur à celui disponible (en cours) dans la seconde section S2, seule une partie de ces données est intégrée dans la seconde section S2, l'autre partie attendant son intégration dans la trame compressée suivante. On peut également envisager que le nombre de données, stockées en tête d'un enchaînement et appartenant à une même trame, soit inférieur à celui disponible (en cours) dans la seconde section S2. Dans ce cas, ces données sont intégrées dans la seconde section S2 par concaténation avec une partie (ou la totalité) des données qui les suivent dans l'enchaînement et qui appartiennent à une autre trame.

Le champ d'entête EN2 identifie le début de la trame asynchrone S2. Il comporte les informations qui désignent chaque canal de la trame d'entrée reçue auquel appartiennent les données dont sont issues les données contenues dans le champ ZD2, ainsi que la longueur dudit champ ZD2. En fait, le champ d'entête EN2 comprend toutes les informations nécessaires au dispositif de décompression 6 pour reconstituer les données non critiques et donc les trames dont elles sont issues.

Une fois que la seconde section S2 est constituée, le module de compression 8 la concatène à la première section S1, ce qui constitue une trame compressée TC, du type de celle illustrée sur la figure 5. Le dispositif de compression 5 peut alors la mettre au format des blocs de données à l'interface avec le modem 1, avant de la transmettre au modulateur 3 concerné.

Le délai introduit par la compression asynchrone varie donc en fonction de la capacité offerte par le lien de transmission à un instant donné et de la capacité utilisée par les flux traités de manière synchrone, alors que le délai introduit par la compression synchrone est fixe.

Le fonctionnement du dispositif de décompression 6, selon l'invention, est grossièrement inversé par rapport à celui du dispositif de compression 5, qui vient d'être décrit.

Plus précisément, le dispositif de décompression 6 comprend tout d'abord un module de détection 9 chargé d'analyser les trames compressées TC, qu'il reçoit (successivement) du démodulateur 4 auquel il est couplé, afin de séparer leurs première S1 et seconde S2 sections. Il détecte pour ce faire leurs entêtes EN1 et EN2 respectifs.

Le dispositif de décompression 6 comprend également un premier module de traitement 10 chargé de reconstituer de façon synchrone, à partir des premières sections S1 reçues, les données critiques qui étaient initialement contenues dans les trames d'entrée et qui ont été compressées de façon synchrone.

Plus précisément, les trames de parole sont reconstituées à l'aide des données utiles contenues dans le champ ZD1 (après une éventuelle réinsertion des données de synchronisation). Elles sont ensuite transmises à un module de restitution de trames 11, du dispositif de décompression 6, chargé de les restituer à leur emplacement initial dans la trame d'entrée E1, compte tenu des informations contenues dans l'entête EN1.

Les trames de silence sont reconstituées à l'aide des mots d'informations pertinentes contenus dans le champ ZIP et restituées par le module de restitution de trames 11 à leur emplacement initial dans la trame d'entrée E1, compte tenu des informations contenues dans l'entête EN1 et de la valeur par défaut du champ de données de parole.

La reconstitution des trames SID est un peu plus complexe, puisqu'elle requiert une reconstitution effectuée par un second module de traitement 12 du dispositif de décompression 6, dédié aux flux compressés transmis en mode asynchrone. Le module de traitement 12 stocke les contenus des trames reçues via le canal de transmission asynchrone (seconde section S2 de la trame compressée TC), contenus relatifs à des trames SID ou à des trames de signalisation. Pour les contenus relatifs aux trames SID, le contenu le plus récent se substitue au contenu précédent; ce contenu constitue le champ utile D1-D260 de la trame SID, caractérisant le bruit de confort pour le canal considéré. Le second module de traitement 12 comporte au moins autant de mémoires tampon (ou buffers) que de canaux de trafic. Afin d'acheminer les données D1-D260 reçues au canal de trafic voulu, le second module de traitement 12 exploite les informations d'entête EN2 pour déterminer à quel canal appartient le champ D1-D260 reçu, et donc dans quel mémoire tampon (ou buffer) ces données doivent être stockées.

En parallèle à ce processus de stockage des données reçues de manière asynchrone, le premier module de traitement 10 reconstitue le corps de la trame SID à partir des mots d'informations pertinentes, reçus de manière synchrone, en suivant le même processus que pour les trames de silence. Le corps de la trame SID concerne la partie bits de synchronisation, bits de contrôle C₁ à C₂₁, et bits d'alignement temporel T₁ à T₄.

Comme pour les trames de parole et les trames de silence, le module de restitution des trames 11 est chargé de restituer chaque trame SID à son emplacement initial au sein de la trame E1 de sortie. La trame SID restituée par le module de restitution de trames 11 est constituée par le corps de la trame SID, reconstitué par le premier module de traitement 10, et par le champ utile D1-D260 de la trame SID, bufférisé par le second module de traitement 12.

Pour la première trame de silence qui suit une succession de trames de parole, le second module de traitement 12 peut échantillonner les données caractérisant le bruit de confort dans la toute dernière trame reçue (trame SID), transmise lors de la transition du mode parole vers le mode silence, suivant le même mode que les trames de parole. Cette opération garantit une transition plus précise du mode de transmission synchrone, qui s'applique aux trames de parole, au mode de transmission asynchrone, qui s'applique aux trames SID : le bruit de confort présent dans la mémoire tampon (ou buffer) du canal considéré est plus récent que celui qui aurait été présent sans cette opération, en l'occurrence le bruit échantillonné juste avant la séquence de trames de parole. Grâce à cette opération, le bruit présent dans la mémoire tampon (ou buffer) est le bruit échantillonné juste à la fin de la séquence de parole, avant même qu'une transmission asynchrone des données D1-D260 ait été effectuée pour ce même canal.

Il est important de noter que le second module de traitement 12 est également chargé de reconstituer les données de signalisation qui sont contenues dans le champ ZD2. Elles sont ensuite transmises au module de restitution de trames 11 afin qu'il les restituent à leur emplacement initial dans la trame d'entrée E1, compte tenu des informations contenues dans l'entête EN2.

Préférentiellement, les premier 10 et second 12 modules de traitement fonctionnent en parallèle.

Dans le cadre de déports par voie hertzienne ou par satellite, l'invention a également pour objet de garantir que le taux d'erreur, qui est garanti pour chaque type de flux, respecte les contraintes propres au flux concerné.

Comme le sait l'homme de l'art, certains modems sont agencés pour effectuer un encodage des informations contenues dans les trames à transmettre. Cet encodage est fixe, et indépendant des types de flux transmis. Il permet de limiter le taux d'erreur en réception en insérant des données de redondance sur les informations transmises. Afin de garantir une efficacité spectrale optimale, c'est-à-dire maximiser le débit utile à bande satellite fixée, le taux de cet encodage est fixé à une valeur faible, de sorte que le surdébit introduit par les données de redondance reste le plus faible possible, à taux d'erreur donné. Le taux d'erreur tolérable sur un déport A-bis avec compression dépend du flux véhiculé, par exemple :
- taux d'erreur généralement inférieur à 10⁻¹⁰ pour les informations d'entête nécessaires au processus de décompression,
- taux d'erreur faible également pour les trames de parole, de l'ordre de 10⁻⁸,
- taux d'erreur faible pour les trames de signalisation,
- taux d'erreur moyen pour les données relatives au bruit de confort.

Pour optimiser la transmission en fonction du flux transmis, l'invention propose un pré-encodage destiné à rendre le taux d'erreur adapté à chaque type de flux (ou trafic).

A cet effet, le système de traitement MT comprend un module de sur-encodage 13, de préférence implanté dans son compresseur/décompresseur 2, et chargé de pré-encoder indépendamment chaque type de flux, hormis, de préférence, les flux les plus tolérants en taux d'erreur, comme par exemple les flux relatifs au bruit de confort.

Ce pré-encodage consiste à introduire des bits de redondance pour chaque type de flux transmis, hormis pour les flux nécessitant la qualité de transmission la moins élevée (bruit de confort dans l'exemple précédent). Le nombre de bits de redondance dépend de la qualité souhaitée. Les bits de redondance sont utilisés en réception pour détecter et corriger les erreurs introduites sur la liaison. Plus le nombre de bits de redondance est élevé, plus le taux d'erreur peut être réduit grâce à ce principe, à qualité de liaison donnée (rapport signal à bruit et intermodulations).

Le terme de pré-encodage fait allusion à l'introduction de bits de redondance supplémentaires, vis-à-vis de ceux introduits par le dispositif de transmission, qui procède lui aussi à un encodage, suivant le même principe, destiné à réduire l'impact des imperfections de la liaison, toutefois suivant un usage non différentié entre les différents types de flux acheminés. La séparation des flux effectuée au niveau du compresseur permet de pré-encoder chaque flux en fonction de la criticité des données véhiculées.

A cet effet, le module de sur-encodage 13 est alimenté en trames compressées TC par le dispositif de compression 5 et alimente en trames compressées et pré-encodées le modulateur 3 auquel le compresseur/ décompresseur 2 est couplé. Le modulateur 3 n'a plus alors qu'à effectuer un encodage global classique des trames compressées et pré-encodées.

En réception, le démodulateur 4 concerné effectue classiquement la correction d'erreur globale sur la trame compressée TC reçue, qu'il a préalablement démodulée, puis le module de sur-encodage 13 applique à la trame compressée et démodulée un désencodage propre à chaque type de flux.

Le taux d'erreur global est ainsi adapté à chaque type de flux pour des conditions de transmission données, c'est-à-dire pour un rapport signal à bruit E_{b}/N₀ donné et un taux d'intermodulation donné. Cela permet d'accroître notablement l'efficacité spectrale du système de traitement MT, en réduisant le taux de redondance appliqué au flux global, les flux les plus critiques étant dotés de leur propre protection.

Le dispositif de compression 5, et notamment ses modules d'analyse 7 et de compression 8, le dispositif de décompression 6, et notamment ses modules de détection 9 et de restitution 11 et ses premier 10 et second 12 modules de traitement, et le module de sur-encodage 13 peuvent être réalisés sous la forme de circuits électroniques, de modules logiciels (ou informatiques), ou d'une combinaison de circuits et de logiciels.

L'invention permet de combiner les avantages d'un traitement synchrone et ceux d'un traitement asynchrone. Par ailleurs, elle permet d'avoir un délai bout-en-bout déterministe et invariant pour les canaux que l'opérateur considère comme critiques, et notamment pour la transmission de la parole.

En outre, l'invention permet d'avoir un délai bout-en-bout de courte durée, et paramétrable en compromis avec le surdébit de compression.

De plus, l'invention offre un lissage des flux asynchrones du fait qu'ils sont transmis en utilisant les reliquats de bande passante (secondes sections des trames compressées).

Egalement grâce à l'invention, chaque type de trafic peut être pris en compte.

Enfin, l'invention est compatible avec une méthode de répartition des ressources (ou canaux de transmission) du satellite entre les différentes liaisons satellite, dite DAMA (pour « Demand Assignment Multiple Access »), par le biais d'un débit global variant lentement (contrairement à un trafic en rafale (ou « bursty »)).

Sur ce dernier aspect, l'invention tire parti des caractéristiques dynamiques des signaux transmis : typiquement 80% du trafic est constitué par le trafic de parole. Hors, le trafic de parole évolue lentement, lorsqu'un nouvel appel est établi, ou lorsqu'un appel s'achève, ou encore lorsque la parole cède la place au silence sur un canal donné, et réciproquement. Ces événements se produisent à un rythme faible en comparaison avec les applications des systèmes de transmission multimédia où les flux de données sont sporadiques, notamment à chaque fois qu'un utilisateur sollicite un transfert de fichier ou accède à une nouvelle page web. De plus, pour un nombre d'appels simultanés élevé, ce qui est le cas aux heures de pointe, il se produit un phénomène de lissage global de l'ensemble des trafics de parole, autour de la valeur médiane de trafic située entre 35% et 50% des canaux établis, conformément au prorata moyen de temps de parole vis-à-vis de la durée de communication. A l'heure la plus chargée, et donc la plus contraignante pour le dispositif de transmission, les variations relatives de charge sont réduites grâce à ce phénomène de lissage, propice donc à l'exploitation de moyens de compression associés à un système de transmission opérant en mode DAMA : la réactivité du système peut être relativement lente, le trafic évoluant lentement.

L'invention ne se limite pas aux modes de réalisation de dispositif de compression, dispositif de décompression, compresseur/décompresseur et réseau de communications décrits ci-avant, seulement à titre d'exemple, mais elle englobe toutes les variantes que pourra envisager l'homme de l'art dans le cadre des revendications ci-après.

Ainsi, l'invention concerne également les réseaux de communications autres que cellulaires. Le principe de transmission mixte synchrone/asynchrone avec auto-adaptation des ressources de transmission utilisées pour chaque flux permet en effet d'optimiser les déports de trafic de type parole, données et/ou signalisation sur des réseaux autres que cellulaires, en fonction de la criticité relative des flux véhiculés, et en garantissant notamment un délai faible et déterministe pour les flux les plus critiques.

## Revendications

1. Dispositif (5) de compression de données contenues dans des trames d'entrée à compresser constituées de trames de flux définissant des portions de trames TRAU et de signalisation, devant être transmises au sein d'un réseau de communications et constituées chacune d'au moins un entête comportant des données de contrôle représentatives au moins du type de trame de flux et d'éventuelles données utiles, certains types comportant des données critiques et/ou non critiques, **caractérisé en ce qu'**il comprend des moyens d'analyse (7) agencés pour analyser chaque entête de trame TRAU ou de signalisation contenu dans des trames d'entrée successivement reçues, de manière à déterminer son type, et des moyens de compression (8) agencés pour générer périodiquement des trames compressées (TC) à transmettre, subdivisées en de première (S1) et seconde (S2) sections de tailles variables, ladite première section (S1) comportant des données critiques compressées de façon synchrone, et ladite seconde section (S2) comportant des données non critiques compressées de façon asynchrone.

2. Dispositif de compression selon la revendication 1, **caractérisé en ce que** lesdits types de trame sont choisis dans un groupe comprenant des trames de parole comportant au moins des données de contrôle et des données utiles critiques, des trames de silence comportant au moins des données de contrôle critiques, des trames SID comportant au moins des données de contrôle critiques et des données utiles non critiques, et des mauvaises trames comportant au moins des données de contrôle critiques.

3. Dispositif de compression selon l'une des revendications 1 et 2, **caractérisé en ce que** lesdits moyens de compression (8) sont agencés pour générer une trame compressée (TC) toutes les N trames d'entrée reçues, ladite génération d'une trame compressée (TC) s'effectuant pendant la durée d'un cycle de compression.

4. Dispositif de compression selon l'une des revendications 1 à 3, **caractérisé en ce que** les tailles desdites première (S1) et seconde (S2) sections d'une trame compressée (TC) sont variables et complémentaires.

5. Dispositif de compression selon l'une des revendications 2 à 4, **caractérisé en ce que** lesdits moyens de compression (8) sont agencés pour intégrer lesdites trames de parole, sans les modifier, dans les premières sections (S1) desdites trames compressées (TC).

6. Dispositif de compression selon l'une des revendications 2 à 4, **caractérisé en ce que**, lesdites trames de parole comprenant des données de synchronisation et des données de contrôle, lesdits moyens de compression (8) sont agencés pour intégrer lesdites trames de parole dans les premières sections (S1) desdites trames compressées (TC), après suppression desdites données de synchronisation mais sans modification des données de contrôle et des données utiles.

7. Dispositif de compression selon l'une des revendications 2 à 6, **caractérisé en ce que**, lesdites données de contrôle étant contenues dans l'entête et dans une portion terminale desdites trames de flux, lesdits moyens de compression (8) sont agencés, une fois en possession de l'ensemble desdites données de contrôle d'une trame SID ou de silence, ou d'une mauvaise trame, pour supprimer de celles-ci les informations redondantes ou non significatives de manière à générer un mot d'informations pertinentes de taille plus faible.

8. Dispositif de compression selon l'une des revendications 5 et 6 en combinaison avec la revendication 7, **caractérisé en ce que** lesdits moyens de compression (8) sont agencés pour constituer des trames compressées (TC) comportant une première section (S1) comprenant les mots d'informations pertinentes et/ou les données véhiculées par les trames de parole, sans modification ou avec suppression des données de synchronisation, ainsi qu'un entête identifiant le début de ladite trame compressée (TC) et des informations désignant chaque canal de la trame d'entrée reçue auquel appartiennent les données dont sont issues lesdites informations pertinentes ou les données de ladite trame de parole.

9. Dispositif de compression selon l'une des revendications 2 à 8, **caractérisé en ce que** lesdits moyens de compression (8) sont agencés pour extraire lesdites données utiles contenues dans lesdites trames SID de manière à les stocker provisoirement dans une mémoire tampon, ainsi que les trames de signalisation reçues, en fonction de leur ordre d'arrivée, constituant ainsi un enchaînement, puis pour extraire en tête dudit enchaînement une portion de taille choisie en fonction de la taille variable en cours de la seconde section de manière à intégrer cette portion dans la seconde section de la trame en cours de compression, en compagnie d'un entête identifiant le début de ladite portion extraite et des informations désignant chaque canal de la trame d'entrée reçue auquel appartiennent les données utiles ou les données de signalisation de cette portion d'enchaînement extraite, et enfin pour concaténer ladite seconde section (S2) à ladite première section (S1) de manière à définir une trame compressée (TC) à transmettre.

10. Dispositif de compression selon l'une des revendications 1 à 9, **caractérisé en ce que** lesdits moyens de compression (8) sont agencés pour adapter les tailles respectives desdites première (S1) et seconde (S2) sections en fonction de la charge du réseau en terme de trames de parole.

11. Dispositif (6) de décompression de données contenues dans des trames compressées à l'aide d'un dispositif de compression (5) selon l'une des revendications précédentes, **caractérisé en ce qu'**il comprend des moyens de détection (9) agencés pour analyser les trames compressées (TC) successivement reçues de manière à séparer leurs première (S1) et seconde (S2) sections, des premiers moyens de traitement (10) agencés pour reconstituer de façon synchrone les données critiques des trames d'entrée, compressées de façon synchrone, à partir desdites premières sections (S1) reçues, des seconds moyens de traitement (12) agencés pour reconstituer de façon asynchrone les données non critiques des trames d'entrée, compressées de façon asynchrone, à partir desdites secondes sections (S2) reçues, et des moyens de restitution (11) agencés pour reconstruire lesdites trames d'entrée initiales à partir des données critiques et non critiques reconstituées.

12. Dispositif de décompression selon la revendication 11, **caractérisé en ce que** lesdits moyens de traitement synchrone (10) et lesdits moyens de traitement asynchrone (12) fonctionnent en parallèle.

13. Compresseur/décompresseur pour un réseau de communications, **caractérisé en ce qu'**il comprend un dispositif de compression (5) et un dispositif de décompression (6) selon l'une des revendications précédentes.

14. Compresseur/décompresseur selon la revendication 13, **caractérisé en ce qu'**il comprend des moyens de sur-encodage (13) couplés auxdits dispositifs de compression (5) et de décompression (6) et agencé, d'une part, pour appliquer un pré-encodage des données contenues dans chaque trame compressée en fonction du type de flux auquel les données appartiennent respectivement, et d'autre part, pour appliquer aux données contenues dans chaque trame compressée et démodulée un désencodage propre au type de flux auquel elles appartiennent respectivement.

## Patentansprüche

1. Vorrichtung (5) zur Datenkompression in zu komprimierenden Eingaberahmen, die Stromraster umfassen, um Rasterportionen von TRAU- und Signalrahmen zu definieren, bevor sie innerhalb eines Kommunikationsnetzes übermittelt werden und die jeweils mindestens einen Kopf mit repräsentativen Steuerungsdaten mindestens des Stromrastertyps und von möglicherweise nützlichen Daten enthält, wobei einige Typen möglicherweise kritische und/oder unkritische Daten enthalten, **dadurch gekennzeichnet, dass** sie Mittel zur Analyse (7) enthalten, die angeordnet sind, um jeden der Köpfe der TRAU- oder Signalrahmen, die in den Eingabesrahmen aufeinanderfolgend enthalten sind, zu analysieren um seinen Typ bestimmt wird, und dass sie Kompressionsmittel (8) enthalten, um periodisch komprimierte Rahmen (TC) zu erzeugen,die, in erste (S1) und zweite (S2) Abschnitte von variabler Größe unterteilt, diesen ersten Abschnitt (S1), der kritische komprimierte Daten enthält, synchron zu übertragen und diesen zweiten Abschnitt (S2), der unkritische komprimierte Daten enthält, asynchron zu übertragen.

2. Kompressionsvorrichtung nach Anspruch 1, **dadurch gekennzeichnet, dass** die Rahmentypen aus einer Gruppe ausgewählt werden, die umfasst: Sprachrahmen, die mindestens Steuerungsdaten und kritische nützlichen Daten enthalten, Ruherahmen. diemindestens kritische Steuerungsdaten enthalten, SID-Rahmen, diemindestens kritische Steuerungsdaten und nützliche unkritische Daten enthalten und schlechte Rahmen, diemindestens kritische Steuerungsdaten enthalten.

3. Kompressionsvorrichtung nach einem der Ansprüche 1 und 2, **dadurch gekennzeichnet, dass** die Kompressionsmittel (8) so angeordnet sind, dass ein komprimierter Rahmen (TC) mit allen erhaltenen Eingabesrahmen N hergestellt wird, wobei die Herstellung eines komprimierten Rahmens (TC) während der Dauer eines Komprimierungszyklus erfolgt.

4. Kompressionsvorrichtung nach einem der Ansprüche 1 bis 3, **dadurch gekennzeichnet, dass** die Größen der ersten (S1) und zweiten (S2) Abschnitte eines komprimierten Rahmens (TC) variabel sind und sich ergänzen.

5. Kompressionsvorrichtung nach einem der Ansprüche 2 bis 4, **dadurch gekennzeichnet, dass** die Kompressionsmittel (8) angepasst sind, um die genannten Wortrahmen ohne eine Änderung in die ersten Abschnitte (S1) des komprimierten Rahmens (TC) einzufügen.

6. Kompressionsvorrichtung nach einem der Ansprüche 2 bis 4, **dadurch gekennzeichnet, dass** die Sprachrahmen, die Synchronisierungs- und Kontrolldaten umfassen (8), angepasst sind, um die Sprachrahmen nach Löschung der genannten Synchronisierungsdaten ohne Änderung der Steuerungs- und nützlichen Daten in die ersten Abschnitten (S1) der komprimierten Rahmen (TC) einzufügen.

7. Kompressionsvorrichtung nach einem der Ansprüche 2 bis 6, **dadurch gekennzeichnet, dass** die Steuerungsdaten in dem Kopf und in einem Endabschnitt derStromrahmen enthalten sind, wobei die Kompressionsmittel (8) angepasst sind, um, sobald sie im Besitz der ganzen Steuerungsdaten eines SID-Rahmens oder Ruherahmens oder eines schlechten Rahmens sind, diese redundanten oder unbedeutenden Informationen zu entfernen sind, um ein Wort mit kleineren Größeninformationen zu erzeugen.

8. Kompressionsvorrichtung nach einem der Ansprüche 5 und 6 in Kombination mit Anspruch 7, **dadurch gekennzeichnet, dass** Kompressionsmittel (8) so angeordnet sind, dass komprimierte Rahmen (TC) sich zusammensetzen aus: einem ersten Abschnitt (S1), der Worte mit relevanten Informationen und/oder die durch die Sprachrahmen übermittelten Daten ohne Modifikation oder Entfernung von Synchronisationsdaten umfasst, sowie einem Kopf des komprimierten Rahmen (TC) und Informationen zur Bezeichnung jedes Kanals des Eingaberahmens, zu dem die Daten gehören, von denen dierelevanten Informationen oder die Daten des Sprachrahmens abgeleitet sind.

9. Kompressionsvorrichtung nach einem der Ansprüche 2 bis 8, **dadurch gekennzeichnet, dass** die Kompressionsmittel (8) zum Herausfiltern der in den SID-Rahmen enthaltenen nützlichen Daten angeordnet sind, so dass diese provisorisch in einem Puffer gespeichert werden, sowie dass die empfangenen Signalrahmen gemäß ihrer Empfangsreihenfolge eine Sequenz bilden, und dann am Kopf der Sequenz einen Teil von gewünschter Größe gemäß einer variablen Größe im Laufe des zweiten Abschnitt extrahieren, um den Teil in den zweiten Abschnitt desRahmens im Laufe der Kompression einzufügen mit einem Kopf zur Markierung des Beginns des extrahierten Teils und Informationen zur Kennzeichnung jedes Kanals des empfangenen Eingabesrahmens, zu dem die nützlichen oder Signaldaten dieses Teils der extrahierten Sequenz gehören, und schließlich den zweiten Abschnitt (S2) mit dem ersten Abschnitt (S1) zu verknüpfen, um einen komprimierten Rahmens (TC) zu definieren.

10. Kompressionsvorrichtung nach einem der Ansprüche 1 bis 9, **dadurch gekennzeichnet, dass** die Kompressionsmittel (8) angeordnet sind, um die jeweiligen Größen der genannten ersten (S1) und zweiten (S2) Abschnitte anzupassen entsprechend der Netzwerklast in Bezug auf Sprachrahmen.

11. Dekomprimierungsvorrichtung (6) der in den komprimierten Rahmen enthaltenen Daten mittels einer Kompressionsvorrichtung (5) nach einem der vorhergehenden Ansprüche, **dadurch gekennzeichnet, dass** sie umfasst: Erfassungsmittel (9), die angeordnet sind, um die nacheinander empfangenen komprimierten Rahmen (TC) zu analysieren, um ihre ersten (S1) und zweiten (S2) Abschnitte zu trennen; erste Verarbeitungsmittel (10), die angeordnet sind, um synchron die kritischen Daten des Eingaberahmens, die synchron komprimiert wurden, ausgehend von den empfangenen ersten Abschnitten (S1) wiederherzustellen; zweite Verarbeitungsmittel (12), die angeordnet sind, um asynchron die unkritischen Daten des Eingaberahmens, die asynchron komprimiert wurden, ausgehend von den empfangenen zweiten Abschnitten (S2) wiederherzustellen; und Restitutionsmittel (11), um die ursprünglichen Eingaberahmenausgehend vonwiederhergestellten kritischen und unkritischen Daten wiederherzustellen.

12. Dekompressionsvorrichtung nach Anspruch 11, **dadurch gekennzeichnet, dass** die Synchronverarbeitungseinrichtungen (10) und die Mittel zur asynchronen Bearbeitung (12) parallel arbeiten.

13. Kompressor/Dekompressor für ein Kommunikationsnetz, **dadurch gekennzeichnet, dass** er eine Kompressionsvorrichtung (5) und eine Dekompressionsvorrichtung (6) nach einem der vorhergehenden Ansprüche enthält.

14. Kompressor/Dekompressor nach Anspruch 13, **dadurch gekennzeichnet, dass** er Codiereinrichtungen (13) enthält, die an die Kompressionseinrichtung (5) und an die Dekompressionseinrichtung (6) gekuppelt sind, um einerseitseine Vorcodierung der in jedem komprimierten Rahmen enthaltenen Daten gemäß des Stromtyps, zu dem die Daten jeweils gehören, auszuführen, und andererseits auf die in jedem komprimierten und demodulierten Rahmen enthaltenen Daten eine Decodierung für jede eigene Art von Strom, zu dem sie jeweils gehören, anzuwenden.

## Claims

1. Device (5) for compressing data contained in input frames to be compressed comprising stream frames defining portions of TRAU and signalling frames that have to be transmitted within a communication network and each of which comprising at least a header containing control data representative of at least one type of stream frame and potential payload data, certain types containing at least one of critical and/or non-critical data, **characterised in that** it comprises analysis means (7) which are configured to analyse each TRAU or signalling frame header contained in successively received input frames in such a way as to determine its type, and compression means (8) which are configured to periodically generate compressed frames (TC) to be transmitted, subdivided into first (S1) and second (S2) sections of variable sizes, said first section (S1) comprising synchronously compressed critical data and said second section (S2) comprising asynchronously compressed non-critical data.

2. Compression device according to claim 1, **characterised in that** said frame types are selected from a group comprising speech frames containing at least control data and critical payload data, silence frames containing at least critical control data, SID frames containing at least critical control data and non-critical payload data, and bad frames containing at least critical control data.

3. Compression device according to one of claims 1 and 2, **characterised in that** said compression means (8) are configured to generate one compressed frame (TC) per N input frames received, said generation of a compressed frame (TC) taking place during a compression cycle.

4. Compression device according to one of claims 1 to 3, **characterised in that** the sizes of said first (S1) and second (S2) sections of the compressed frame (TC) are variable and complementary.

5. Compression device according to one of claims 2 to 4, **characterised in that** said compression means (8) are configured to integrate said speech frames, without modifying them, into first sections (S1) of said compressed frames (TC).

6. Compression device according to one of claims 2 to 4, **characterised in that**, with said speech frames comprising synchronisation data and control data, said compression means (8) are configured to integrate said speech frames into the first sections (S1) of said compressed frames (TC) after suppression of said synchronisation data but without modifying said control data and said payload data.

7. Compression device according to one of claims 2 to 6, **characterised in that**, with said control data being contained in the header and in an end portion of said stream frames, said compression means (8), once in possession of all of said control data of an SID frame, a silence frame, or a bad frame, is configured to remove redundant or non-significant information from this in such a way as to generate a relevant information word of a smaller size.

8. Compression device according to one of claims 5 and 6 in combination with claim 7, **characterised in that** said compression means (8) are configured to form compressed frames (TC) comprising a first section (S1) comprising relevant information words and/or data transmitted via the speech frames, without modification or with deletion of synchronisation data, as well as a header identifying the start of said compressed frame (TC) and information designating each channel of the received input frame to which belongs the data from which said relevant information or the data of said speech frame is obtained.

9. Compression device according to one of claims 2 to 8, **characterised in that** said compression means (8) are configured to extract said payload data contained in said SID frames in such a way as to store them temporarily in a buffer, as well as the signalling frames received, according to their order of arrival, thereby constituting a string, then to extract, from the top of said string, a portion whose size is selected according to the current variable size of the second section, in such a way as to integrate this portion into the second section of the frame currently being compressed, accompanied by a header identifying the start of said extracted portion and information designating each channel of the received input frame to which the extracted payload data or the extracted signalling data of this string portion belongs, and finally to concatenate said second section (S2) to said first section (S1) so as to define a compressed frame (TC) to be transmitted.

10. Compression device according to one of claims 1 to 9, **characterised in that** said compression means (8) are configured to adapt respective sizes of said first (S1) and second (S2) sections according to the load of the network in terms of the speech frames.

11. Device (6) for decompressing data contained in frames compressed with the aid of a compression device (5) according to one of the preceding claims, **characterised in that** it comprises detection means (9) which are configured to analyse successively received compressed frames (TC) in such a way as to separate the first (S1) and second (S2) sections thereof, first processing means (10) which are configured to synchronously reconstitute the critical data of the input frames, synchronously compressed, from said first received sections (S1), second processing means (12) which are configured to asynchronously reconstitute the non-critical data of the input frames, asynchronously compressed, from said second received sections (S2), and restoring means (11) which are configured to restore said original input frames from the reconstituted critical and non-critical data.

12. Decompression device according to claim 11, **characterised in that** said synchronous processing means (10) and said asynchronous processing means (12) operate in parallel.

13. Compressor/decompressor for a communication network, **characterised in that** it comprises a compression device (5) and a decompression device (6) according to one of the preceding claims.

14. Compressor/decompressor according to claim 13, **characterised in that** it comprises pre-encoding means (13) which are coupled to said compression (5) and decompression devices (6) and is configured, on the one hand, to apply pre-encoding to the data contained in each compressed frame according to the type of stream to which the data respectively belongs, and on the other hand to apply decoding to the data contained in each compressed and demodulated frame, said decoding being specific to the type of stream to which the data respectively belongs.
